# EUROPÄISCHE PATENTANMELDUNG

(11) **EP 2 789 241 A1**
(43) Veröffentlichungstag der Anmeldung: **15.10.2014**
(21) Anmeldenummer: 13162895.0
(22) Anmeldetag: 09.04.2013
(51) Int. Cl.: A21C 15/00

(54) **Auslass für ein Glasiergerät**

(71) Anmelder: Schumann, Jörg, 35452 Heuchelheim (DE)
(72) Erfinder: Schumann, Jörg, 35452 Heuchelheim (DE)
(74) Vertreter: advotec.

(57) **Zusammenfassung**

Die Erfindung betrifft eine Vorrichtung zur Erzeugung eines fließenden Glasurschleiers zum Überziehen hindurchbewegter Backwaren mit einer Glasur, wobei die Vorrichtung einen Hohlkörper mit einer horizontalen spaltförmigen Austrittsöffnung (4) aufweist, die oberhalb eines Vorsprungs (12) angeordnet ist, wobei der Abstand der oberen Kante der Austrittsöffnung (4) zur unteren Kante der Austrittsöffnung (4) manuell einstellbar ist.

## Beschreibung

Die Erfindung betrifft eine Vorrichtung zur Erzeugung eines fließenden Glasurschleiers sowie ein Glasiergerät aufweisend eine solche Vorrichtung.

Zweck der erfindungsgemäßen Vorrichtung und des Glasiergeräts ist es, das Glasieren von Gebäcken aller Art mit fließfähigen essbaren Massen (Glasuren) aller Art, wie zum Beispiel Zuckerguss oder Schokolade, zu vereinfachen und für ein gleichmäßiges und optisch ansprechendes Endergebnis zu sorgen, auch wenn unterschiedliche Glasuren verwendet werden. Besonders bei kleineren Betriebsgrößen werden die verschiedenen Glasierarbeiten in der Regel von Hand durch Bestreichen mittels Pinsel oder durch vereinzeltes Eintauchen in die Glasurmasse bewerkstelligt, da der finanzielle Einsatz beziehungsweise die Investition in automatische Anlagen im Verhältnis zur Produktionsmenge unwirtschaftlich bleibt und/oder entsprechend große Produktionsflächen nicht zur Verfügung stehen.

Die aktuellen industriellen Glasieranlagen für Backwaren arbeiten zum Ausformen einer Glasurwand in der Regel nach dem Überlaufprinzip, wonach die Glasur einem wannenähnlichen Sammelgefäß zugeführt wird und an einer definiert tieferliegenden Überlaufkante per Schwerkraft abfließt. Dieses Prinzip ist jedoch nur bedingt bei kleineren Glasiergeräten, wie zum Beispiel Tischgeräten, anwendbar und eignet sich meist nur für Schleierbreiten über 20 cm und bestenfalls für dünnfließende Schokolade oder Fettglasur.

Hochviskose Glasuren wie Zuckerguss oder Fondant mit geringerem Wasseranteil bilden durch die hohe Oberflächenspannung und hohe Viskosität bereits nach geringen Fallhöhen durch Einschnürung zur Mitte einen fast wieder runden Flussquerschnitt aus, so dass das Glasieren verschieden hoher Gebäcke häufige Höhen-Korrekturen der Schleiervorrichtung und eine genaue mittige Positionierung der Backwaren erfordert.

Auch sind die gewünschten dünnwandigen Glasurdecken oft nicht zufriedenstellend herstellbar, ohne die Glasuren merklich zu verdünnen, was aber wiederum in der Regel die Qualität beziehungsweise Haltbarkeit der Backwaren negativ beeinflusst.

Aus der DE 42 13 296 A1 ist eine Vorrichtung bekannt, bei der eine fließfähige Glasur mit Hilfe von Druckluft aus einem Druckbehälter in eine Sprühpistole gedrückt wird. Über die Sprühpistole kann die flüssige Glasur auf einem Bäckereiprodukt appliziert werden. Ein Durchlauferhitzer beheizt die fließfähige Glasur, bevor sie in die Sprühpistole gelangt. Dabei soll durch die Regulierung der Druckluft und der Materialmenge der fließfähigen Masse auch die Breite des Sprühstrahls eingestellt werden.

Nachteilig ist hieran, dass es bei zähen fließfähigen Glasuren nicht gelingt, zuverlässig einen breiten Strahl zu erzeugen. Zudem ist der Aufbau relativ aufwendig und erfordert neben einem elektrischen Anschluss auch eine externe Druckluftversorgung. Des Weiteren erfordert die Vorrichtung eine aufwendige Reinigung, wenn beispielsweise die Sprühpistole beziehungsweise die Kanäle in der Sprühpistole verstopfen, weil die Glasur verklumpt. Ferner ist der dort geschilderte Aufbau kostspielig und komplex im Aufbau. Auch benötigt die Anwendung dieser Vorrichtung handwerkliches Geschick und ein gewisses Maß an Aufmerksamkeit.

Zwischenzeitlich kommen in kleineren Bäckereibetrieben zunehmend elektrisch beheizte Wasserbäder oder Bain-Marie-Tischgeräte als Warmhaltegeräte zum Einsatz, um eine Glasurmenge auf Verarbeitungstemperatur zu bringen und gegebenenfalls dort zu halten. Jedoch erfolgt das eigentliche Auftragen der Glasur immer noch manuell und ist dadurch arbeits- und lohnintensiv.

Insbesondere die optischen und qualitativen Schwankungen durch Zeitdruck oder Mitarbeiterwechsel stellen oft eine erhebliche Wertminderung der Backwaren im Ladenverkauf dar und entziehen dem Bäckerei-Handwerk in der Theken-präsentation häufig die wichtige Abgrenzung zu Industrie- oder Discountbackwaren.

Insofern besteht Bedarf an kompakten Glasiergeräten, welche einfach in Betrieb und Reinigung bei geringen Kosten und gleichbleibend hoher Qualität der Gebäcke den Arbeitsablauf rationalisieren.

Die Aufgabe der Erfindung besteht also darin, die Nachteile des Stands der Technik zu überwinden. Insbesondere soll ein Auslass für ein Glasiergerät bereitgestellt werden, der kostengünstig und einfach im Aufbau ist und leicht gereinigt werden kann. Zudem sollen alle oder möglichst viele verschiedene fließfähige Glasuren, die zum Glasieren von Backwaren verwendet werden, über den Auslass gleichmäßig auftragbar sein. Des Weiteren sollte die Vorrichtung einfach und leicht zu bedienen sein und für Störungen möglichst unempfindlich sein. Im Falle einer typischen Störung soll die Vorrichtung möglichst leicht und schnell wieder einsetzbar sein, um die Abläufe im Bäckereibetrieb möglichst wenig aufzuhalten. Insbesondere soll die Anwendung neuartiger kleiner Glasiergeräte oder entsprechender Tischgeräte verbessert werden. Auch sollen die Auslässe und damit die Glasiergeräte für dickfließende Glasuren einsetzbar sein.

Die Aufgaben der Erfindung werden gelöst durch eine Vorrichtung zur Erzeugung eines fließenden Glasurschleiers zum Überziehen hindurchbewegter Backwaren mit einer Glasur, wobei die Vorrichtung einen Hohlkörper mit einer horizontal spaltförmigen Austrittsöffnung aufweist, die oberhalb eines Vorsprungs angeordnet ist, wobei der Abstand der oberen Kante der Austrittsöffnung zur unteren Kante der Austrittsöffnung manuell einstellbar ist.

Die Richtungen oben und unten sind bei einem erfindungsgemäßen Auslass dadurch definiert, dass der Auslass im normalen Betrieb eines Glasurgeräts oberhalb des Gebäcks angeordnet ist, das glasiert werden soll, so dass eine fließfähige Glasur auf das Gebäck auftragbar ist. Das Gebäck wird dazu auf einer Fördereinrichtung, insbesondere einem Förderband des Glasurgeräts transportiert und dabei von oben über den Auslass glasiert. Die Begriffe oben und unten können also auf die Position bezogen auf die Erdoberfläche verstanden werden, wenn die Glasurgeräte für den normalen Gebrauch aufgestellt sind.

Es kann vorgesehen sein, dass die horizontal spaltförmige Austrittsöffnung eine horizontal durchgehende spaltförmige Austrittsöffnung ist.

Ferner kann vorgesehen sein, dass der Vorsprung nach unten abgewinkelt ist.

Mit einer Weiterbildung der Erfindung wird vorgeschlagen, dass die Vorrichtung zwei Verstellelemente zur Einstellung des Abstands der oberen Kante der Austrittsöffnung zur unteren Kante der Austrittsöffnung aufweist, wobei bevorzugt die Verstellelemente gefedert gelagerte Stellmuttern oder Rändelmuttern sind.

Mit einer besonders bevorzugten Weiterbildung der Erfindung wird vorgeschlagen, dass die Vorrichtung eine schwenkbare Winkelblende aufweist, die die obere Kante der Austrittsöffnung umfasst und die zumindest bereichsweise diejenige Wand des Hohlraums bildet, die auf der Seite der Austrittsöffnung angeordnet ist, wobei zumindest ein Federelement zwischen der Winkelblende und den restlichen Wänden des Hohlraums derart angeordnet ist, dass die Winkelblende geschlossen ist und den Hohlraum bis auf die Austrittsöffnung schließt.

Dabei kann vorgesehen sein, dass an der Winkelblende ein Griffstück angeordnet ist, mit dem sich die Winkelblende gegen die Kraft des Federelements öffnen lässt.

Auch kann vorgesehen sein, dass die Winkelblende in Flussrichtung der fließenden Glasur schwenkbar ist.

Des Weiteren kann vorgesehen sein, dass die Winkelblende mit einem Innenwinkel zwischen 45° und 89° abgekantet ist, bevorzugt mit einem Innenwinkel zwischen 70° und 85°, besonders bevorzugt mit einem Innenwinkel von 80°.

Gemäß einer besonders bevorzugten Weiterbildung der Erfindung wird vorgeschlagen, dass der Hohlraum vertikal verschiebbar über einem Förderband angeordnet ist, so dass der Abstand zwischen der Austrittsöffnung und dem Förderband einstellbar ist, wobei der Hohlraum über einen flexiblen Schlauch mit einer Pumpe und einer Steigleitung verbunden ist, wobei eine Ansaugöffnung der Steigleitung bis in einen Glasurbehälter reicht, so dass Glasur aus dem Glasurbehälter mit der Pumpe bis in den Hohlraum und aus der Austrittsöffnung förderbar ist.

Erfindungsgemäß kann ferner vorgesehen sein, dass die Austrittsöffnung an beiden Enden breiter als in der Mitte ist, bevorzugt die Winkelblende im Bereich der Enden der spaltförmigen Austrittsöffnung Ausnehmungen aufweist, durch die die Austrittsöffnung in diesem Bereich verbreitert ist.

Die Aufgaben der Erfindung werden auch gelöst durch ein Glasiergerät zum Glasieren von Backwaren aufweisend eine solche Vorrichtung. Dabei kann vorgesehen sein, dass das Glasiergerät ein Warmhaltegerät mit einem Glasurbehälter aufweist.

Die Aufgaben der Erfindung werden erfindungsgemäß also beispielsweise gelöst durch eine Vorrichtung zur Erzeugung eines fließenden Glasurschleiers beliebiger Breite nach Art eines Wasserfalles, zum Überziehen von durch den Glasurschleier bewegter Backwaren mit hochviskosen Glasuren, aufweisend einen oberhalb einer Transporteinrichtung mit vertikaler Verstellbarkeit horizontal gehaltenen, vorzugsweise vierkantigen Hohlkörper mit horizontal durchgehender Austrittsöffnung oberhalb eines nach unten abgewinkelten Vorsprungs, welcher zwischen beidseitigen Verschlussplatten durch eine von zwei federbestückten Verstellelementen vertikal geführte Winkelblende, durch welche sich das als Austrittsöffnung wirksame Spaltmaß gegen die Vorspannung der unterhalb des horizontal liegenden Schenkels der Winkelblende sitzenden Federn mittels der Verstellelemente regulieren lässt. Bei den hochviskosen Glasuren kann es sich beispielsweise um unverdünnten Fondant, eine Schokoladenmasse oder Zuckerguss handeln. Als Verstellelemente werden vorzugsweise zwei Rändelmuttern verwendet.

Bei erfindungsgemäßen Auslässen, Glasiergeräten und Vorrichtungen kann vorgesehen sein, dass durch eine Abkantung der Winkelblende mit einem Innenwinkel von vorzugsweise 80° und die auf den horizontal geneigt liegenden kurzen Schenkel wirksame Druckkraft der Federelemente sich eine resultierende seitliche Kraft (F2) auf den vertikalen Schenkel der Winkelblende ergibt. Durch diese Kraft (F2) wird zum einen eine sichere Abdichtung zum Hohlkörper als auch eine wirksame Druckbegrenzung gemäß der Beschreibung erreicht sowie die Möglichkeit gegeben, durch Anheben des Hebels ein Ausschwenken des vertikal stehenden Schenkels der Winkelblende in Flussrichtung zu bewirken, um eventuell eingeschwemmte Fremdkörper oder gelöste Gebäckreste freizusetzen.

Der Erfindung liegt die überraschende Erkenntnis zugrunde, dass es durch die variable Einstellung der Spaltbreite der Austrittsöffnung gelingt, einen für verschiedene Arten von Glasurmassen beziehungsweise Glasuren geeigneten Auslass bereitzustellen. Wenn eine schwenkbare Winkelblende vorgesehen ist, ergibt sich der Vorteil, dass diese sich automatisch gegen eine Federkraft öffnet, wenn der Staudruck im Hohlraum zu groß wird oder Gebäckreste die Austrittsöffnung teilweise oder vollständig blockieren. Mit Hilfe der Rändelmuttern beziehungsweise anderer Einstellelemente kann die auf die Winkelblende einwirkende Federkraft eingestellt werden. Dadurch ist es möglich, die Winkelblende beziehungsweise deren Schließkraft an die unterschiedliche Konsistenz verschiedener Glasuren anzupassen. Ebenso kann gegen die Federkraft, die die Winkelblende geschlossen hält, die Winkelblende manuell geöffnet werden, um eine Verstopfung oder eine Verklumpung der Austrittsöffnung schnell und einfach manuell zu lösen.

Zur Erzeugung eines homogenen Glasurschleiers (nach Art eines Wasserfalls) mit zähfließenden Glasuren wie unverdünntem Fondant in geringer Breite beziehungsweise kleiner als 20 cm wird erfindungsgemäß die von einer Pumpe in einen oberhalb einer Transporteinrichtung gehaltenen horizontalen Rohrkörper geförderte Glasur über einen bodennah durchgehenden horizontalen Spalt, welcher von einer vertikal einstellbaren Blende ganz oder teilweise abgedeckt wird, durch den Materialdruck der Glasur auf volle Breite ausgeformt, so dass je nach Spaltmaß, Glasurstärken von dünn-transparent bis satt-deckend in homogener Breite ausgeformt werden können.

Zur Druckbegrenzung und um Fehlbedienungen bei der Pumpenregulierung auszuschließen, ist diese vertikal regulierbare Winkelblende zusätzlich in Strömungsrichtung der Glasur flexibel gelagert und kann somit durch lastabhängiges Ausschwenken des Spalts den Druck begrenzen. Durch die flexible Lagerung der Winkelblende kann diese durch manuelles Anheben des Handhebels nach außen gekippt werden und jederzeit zum Freisetzten von eingeschwemmten Fremdkörpern wie Gebäckresten (wie zum Beispiel Kuchenkrümeln, etc.), welche den Schleierfluss stören, genutzt werden.

Im Folgenden werden Ausführungsbeispiele der Erfindung anhand von fünf schematisch dargestellten Figuren erläutert, ohne jedoch dabei die Erfindung zu beschränken. Dabei zeigt:
- Figur 1:: eine schematische Frontalansicht einer erfindungsgemäßen Vorrichtung mit einer Winkelblende;
- Figur 2:: eine schematische Rückansicht einer erfindungsgemäßen Vorrichtung;
- Figur 3:: eine schematische Querschnittansicht auf die Seite einer erfindungsgemäßen Vorrichtung;
- Figur 4:: eine schematische Querschnittansicht auf die Seite einer erfindungsgemäßen Vorrichtung mit gekippter Winkelblende; und
- Figur 5:: eine schematische Rückansicht auf ein erfindungsgemäßes Glasiergerät.

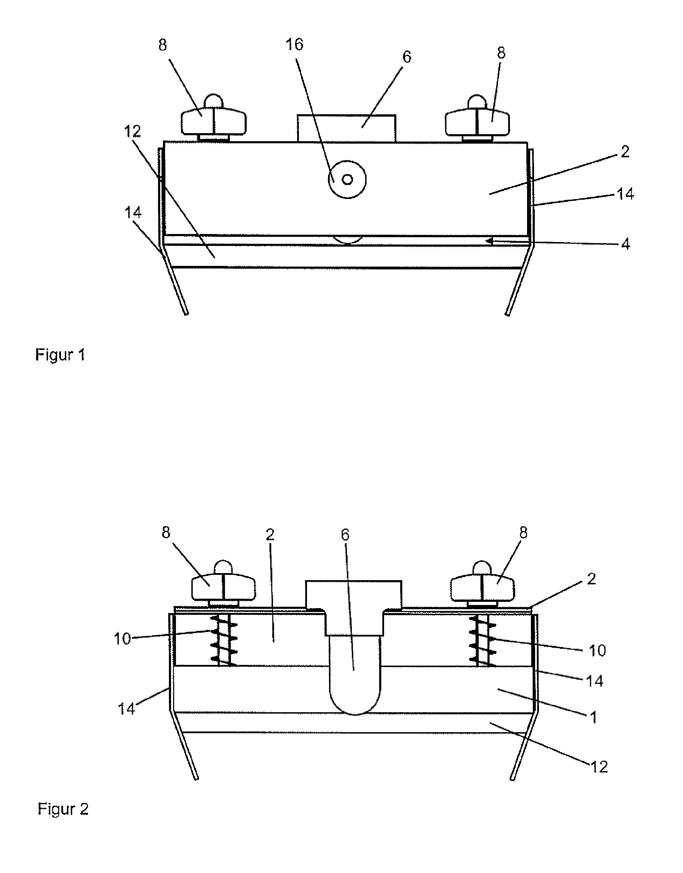

Figur 1 zeigt eine schematische Frontalansicht und Figur 2 eine schematische Rückansicht einer erfindungsgemäßen Vorrichtung zum Glasieren von Backwaren. Die Vorrichtung umfasst einen rechteckigen Kasten 1, der einen quaderförmigen Hohlkörper begrenzt. Auf der Vorderseite (Frontalansicht nach Figur 1) ist der Hohlkörper durch eine Winkelblende 2 begrenzt, die gegen den restlichen Kasten 1 höhenverstellbar und um einen Winkel zwischen 0° und 30° schwenkbar gelagert ist. Die Winkelblende 2 reicht nicht bis zum Boden des Kastens 1, so dass ein Spalt 4 als Auslass 4 aus dem Kasten 1 verbleibt.

Über ein Rohranschlussstück 6 kann der Kasten 1 von oben mit einer Glasur befüllt werden. Wenn der Druck im Kasten 1 und die Viskosität der fließfähigen Glasur ausreichen, wird die Glasur durch den Spalt 4 aus dem Kasten 1 herausgedrückt. Dabei bildet sich ein Glasurschleier, der nach unten abfließt und zum Glasieren eines Gebäcks verwendet werden kann.

Je nach Viskosität der fließfähigen und dazu meist erwärmten Glasur kann die Spaltbreite des Spalts 4 mit Hilfe zweier Stellmuttern 8 eingestellt werden. Eine Stahlfeder 10 übt eine Kraft zwischen der Oberseite des Kastens 1 und dem oberen Ende der Winkelblende 2 aus, das zu diesem Zweck abgebogen beziehungsweise abgewinkelt ist. Auf diese Art wird die Winkelblende 2 nach oben gedrückt, so dass sich der Spalt 4 nicht von alleine schließt.

An der Unterseite des Kastens 1 steht ein Vorsprung 12 über den Spalt 4 hinaus (in Figur 1 in Richtung des Betrachters aus der Bildebene hinaus). Der Vorsprung 12 ist nach unten abgewinkelt. Dadurch kann ein gleichmäßig fließender Glasurschleier erzeugt werden. Die Seitenwände 14 des Kastens 1 ragen über den Kasten 1 hinaus und sollen eine Störung des entstehenden Glasurschleiers vermeiden.

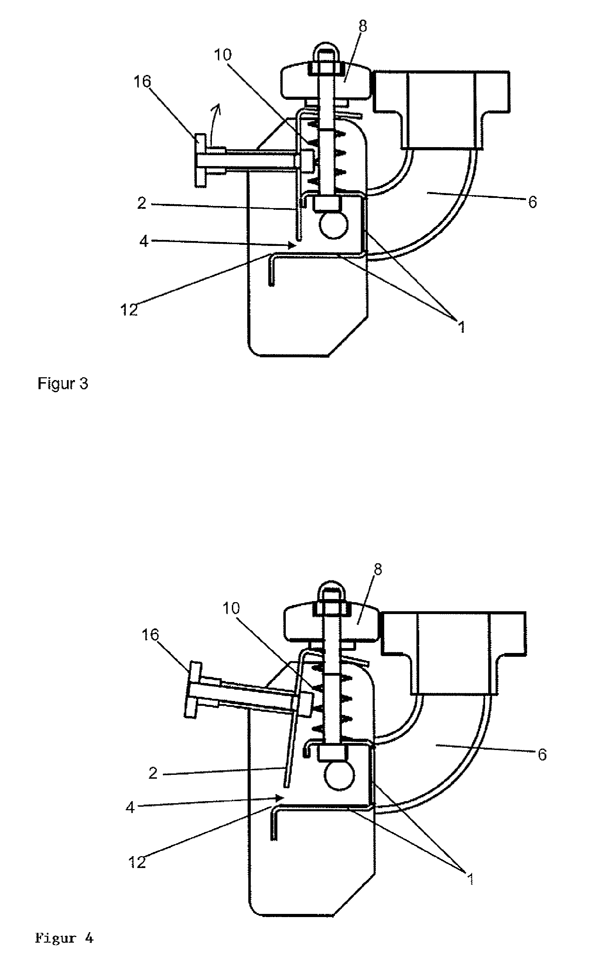

Die Winkelblende 2 ist um eine in den Figuren 1 und 2 waagerechte Achse in den Bildebenen um einen Winkel zwischen 0° und 30° vom Hohlraum des Hohlkörpers gesehen nach außen kippbar gelagert. Zur manuellen Betätigung der Winkelblende 2 ist ein Griffstück 16 mit einer Rändelmutter an der Winkelblende 2 vorgesehen. In den Figuren 1 bis 3 ist die Winkelblende 2 in der nicht gekippten Stellung und in Figur 4 in der gekippten Stellung in einer schematischen seitlichen Querschnittansicht gezeigt.

Beim Kippen der Winkelblende 2 wird die Feder 10 zusammengedrückt, so dass die Winkelblende 2 sich ohne Einwirkung einer äußeren Kraft wieder in die ursprüngliche Position zurückschiebt. Die Winkelblende 2 kann nach oben gekippt werden, um den Spalt 4 zu vergrößern. Dadurch kann der Auslass 4, wenn der Spalt 4 verstopft ist, freigespült werden und die Vorrichtung ist schnell wieder einsatzbereit.

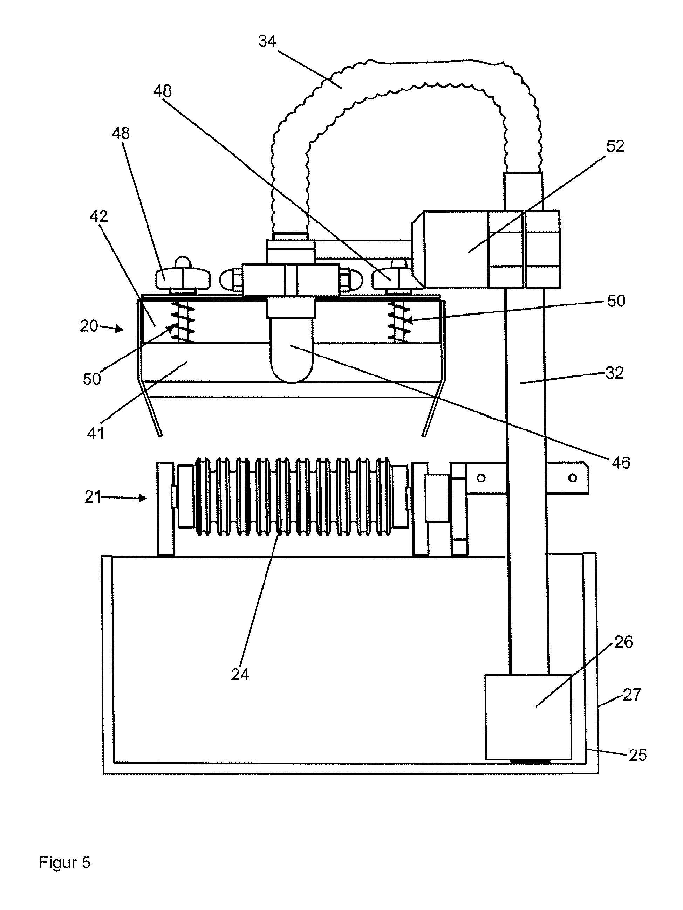

Figur 5 zeigt eine schematische Rückansicht eines erfindungsgemäßen Glasiergeräts mit einer erfindungsgemäßen Vorrichtung 20.

Das Glasiergerät hat eine Fördereinrichtung 21, in der eine Antriebswalze und wenigstens eine Umlenkwalze 24 drehbar gelagert sind. Jede der Walzen 24 weist eine Vielzahl von Rillen für Rundriemen auf, wobei die Rundriemen in die Rillen nach Art einer 360°-Umschlingung eingespannt sind. Anstatt einer 360°-Umschlingung können die Rundriemen auch in anderer Weise aufgespannt werden. Die Rundriemen sollen ein Förderband der Fördereinrichtung 21 bilden. Die Fördereinrichtung 21 ist lösbar als Kassette mit dem restlichen Glasiergerät verbunden. Die äußeren Bereiche der Kassette der Fördereinrichtung 21 liegen auf dem Rand eines Glasurbehälters 25 einer Warmhalteeinrichtung 27 auf. Der Glasurbehälter 25 ist in Figur 5 nur im Querschnitt dargestellt. Die Kassette liegt am vorderen und hinteren oberen Rand des Glasurbehälters 25 auf. Wenn ein besserer Halt auf der Warmhalteeinrichtung 27 gewünscht ist, kann eine Rastvorrichtung, eine Verschraubung oder ein anderer Haltemechanismus an der Kassette der Fördereinrichtung 21 vorgesehen sein, über die die Kassette und damit der gesamte Aufsatz fest mit der Warmhalteeinrichtung 27 verbunden sein kann.

Die Fördereinrichtung 21 ist mit einer Steigleitung 32 verbunden, an deren unteren Ende eine Tauchpumpe 26 angeordnet ist, mit der Glasur aus dem Glasurbehälter 25 nach oben durch die Steigleitung 32 pumpbar ist. An der Oberseite der Steigleitung 32 ist ein flexibler Schlauch 34 mit der Steigleitung 32 verbunden, mit dem die flüssige Glasur zu einem zur Rückseite hin geschlossenen Kasten 41 geleitet wird. Dazu ist an der Rückseite des Kastens 41 ein Anschlussrohr 46 angeordnet, das mit dem flexiblen Schlauch 34 verbunden ist. Die Pumpleistung der Pumpe 26 ist über eine Stellmutter (nicht gezeigt) einstellbar. Ebenso ist die Fördergeschwindigkeit des Förderbands einstellbar.

An der Vorderseite des Kastens 41 ist eine Winkelblende 42 angeordnet, die über den Kasten 41 hinausragt und die an der Vorderseite des Kastens 41 unten einen Spalt frei lässt. Dieser Spalt dient als Auslass für den Aufsatz. Die fließfähige Glasur strömt durch den Kasten 41 und aus dem Auslass heraus und bildet dabei einen Glasurschleier. Die Breite des Spalts des Auslasses ist einstellbar, da die Winkelblende 42 verschiebbar mit dem Kasten 41 verbunden ist. Zwei Stellmuttern 48 dienen dazu, die Position der Winkelblende 42 gegenüber dem Kasten 41 festzulegen und somit die Spaltbreite des Auslasses einzustellen.

Als Rückstellelement für die Einstellung der Spaltbreite und zum Kippen der Winkelblende 42 dienen zwei Federn 50. Die gesamte Stell-Kipp-Schleier-Vorrichtung 20 ist mit einer höhenverstellbaren Halterung 52 mit der Steigleitung 32 verbunden und dadurch an der Steigleitung 32 gehalten.

Ein Gebäck, das auf dem Förderband gefördert wird, wird durch den Glasurschleier transportiert und mit Glasur überzogen. Die überschüssige Glasur läuft zwischen den Rundriemen des Förderbands hindurch und kann dann zurück in den Glasurbehälter 25 fließen.

Die in der voranstehenden Beschreibung sowie den Ansprüchen, Figuren und Ausführungsbeispielen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Vorrichtung (20) zur Erzeugung eines fließenden Glasurschleiers zum Überziehen hindurchbewegter Backwaren mit einer Glasur, wobei die Vorrichtung (20) einen Hohlkörper mit einer horizontalen spaltförmigen Austrittsöffnung (4) aufweist, die oberhalb eines Vorsprungs (12) angeordnet ist, wobei der Abstand der oberen Kante der Austrittsöffnung (4) zur unteren Kante der Austrittsöffnung (4) manuell einstellbar ist.

2. Vorrichtung (20) nach Anspruch 1,
**dadurch gekennzeichnet,**
**dass** der Vorsprung (12) nach unten abgewinkelt ist.

3. Vorrichtung (20) nach Anspruch 1 oder 2,
**dadurch gekennzeichnet,**
**dass** die Vorrichtung (20) zwei Verstellelemente (8, 48) zur Einstellung des Abstands der oberen Kante der Austrittsöffnung (4) zur unteren Kante der Austrittsöffnung (4) aufweist, wobei bevorzugt die Verstellelemente (8, 48) gefedert gelagerte Rändelmuttern sind.

4. Vorrichtung (20) nach einem der vorangehenden Ansprüche,
**dadurch gekennzeichnet,**
**dass** die Vorrichtung (20) eine schwenkbare Winkelblende (2, 42) aufweist, die die obere Kante der Austrittsöffnung (4) umfasst und die zumindest bereichsweise diejenige Wand des Hohlraums bildet, die auf der Seite der Austrittsöffnung (4) angeordnet ist, wobei zumindest ein Federelement (10, 50) zwischen der Winkelblende (2, 42) und den restlichen Wänden (1, 41) des Hohlraums derart angeordnet ist, dass die Winkelblende (2, 42) geschlossen ist und den Hohlraum bis auf die Austrittsöffnung (4) schließt.

5. Vorrichtung (20) nach Anspruch 4,
**dadurch gekennzeichnet,**
**dass** an der Winkelblende (2, 42) ein Griffstück (16) angeordnet ist, mit dem sich die Winkelblende (2, 42) gegen die Kraft des Federelements (10, 50) öffnen lässt.

6. Vorrichtung (20) nach Anspruch 4 oder 5,
**dadurch gekennzeichnet,**
**dass** die Winkelblende (2, 42) in Flussrichtung der fließenden Glasur schwenkbar ist.

7. Vorrichtung (20) nach einem der Ansprüche 4 bis 6,
**dadurch gekennzeichnet,**
**dass** die Winkelblende (2, 42) mit einem Innenwinkel zwischen 45° und 89° abgekantet ist, bevorzugt mit einem Innenwinkel zwischen 70° und 85°, besonders bevorzugt mit einem Innenwinkel von 80°.

8. Vorrichtung (20) nach einem der vorangehenden Ansprüche,
**dadurch gekennzeichnet,**
**dass** der Hohlraum vertikal verschiebbar über einem Förderband angeordnet ist, so dass der Abstand zwischen der Austrittsöffnung (4) und dem Förderband einstellbar ist, wobei der Hohlraum über einen flexiblen Schlauch (34) mit einer Pumpe (26) und einer Steigleitung (32) verbunden ist, wobei eine Ansaugöffnung der Steigleitung (32) bis in einen Glasurbehälter (25) reicht, so dass Glasur aus dem Glasurbehälter (25) mit der Pumpe (26) bis in den Hohlraum und aus der Austrittsöffnung (4) förderbar ist.

9. Vorrichtung (20) nach einem der vorangehenden Ansprüche,
**dadurch gekennzeichnet,**
**dass** die Austrittsöffnung (4) an beiden Enden breiter als in der Mitte ist, bevorzugt die Winkelblende (2, 42) im Bereich der Enden der spaltförmigen Austrittsöffnung (4) Ausnehmungen aufweist, durch die die Austrittsöffnung (4) in diesem Bereich verbreitert ist.

10. Glasiergerät zum Glasieren von Backwaren aufweisend eine Vorrichtung (20) nach einem der vorangehend Ansprüche und vorzugsweise aufweisend ein Warmhaltegerät (27) mit einem Glasurbehälter (25).
